# EUROPÄISCHE PATENTSCHRIFT

(11) **EP 2 703 603 B1**
(45) Veröffentlichungstag und Bekanntmachung des Hinweises auf die Patenterteilung: **03.10.2018**
(21) Anmeldenummer: 13182339.5
(22) Anmeldetag: 30.08.2013
(51) Int. Cl.: F01D 5/18, B23P 15/02, B23P 15/04

(54) **Turbinenschaufel einer Gasturbine mit Drallerzeugungselement und Verfahren zu deren Herstellung**
Turbine blade of a gas turbine with swirl generating element and method for their production
Aube de turbine à gaz dotée d'un élément générateur de tourbillon et son procédé de fabrication

(30) Priorität: 04.09.2012 DE 102012017491
(43) Veröffentlichungstag der Anmeldung: 05.03.2014
(73) Patentinhaber: Rolls-Royce Deutschland Ltd & Co KG, 15827 Blankenfelde-Mahlow (DE)
(72) Erfinder: Lehmann, Knut, Dr., 15712 Königs Wusterhausen (DE); Filipova, Tijana, 12101 Berlin (DE)
(74) Vertreter: Hoefer & Partner Patentanwälte mbB

(56) Entgegenhaltungen:
- EP-A1- 1 621 730
- EP-A2- 2 434 093
- DE-C- 853 534
- DE-T2- 69 817 094
- US-B1- 7 665 965

## Beschreibung

Die Erfindung bezieht sich auf eine Turbinenschaufel einer Gasturbine sowie ein Verfahren zu deren Herstellung.

Im Einzelnen bezieht sich die Erfindung auf eine Turbinenschaufel einer Gasturbine mit einem an einem Schaufelfuß angeordneten Schaufelblatt, welches zumindest einen in Längsrichtung der Turbinenschaufel verlaufenden, in der Turbinenschaufel angeordneten Kühlluftkanal aufweist, welcher sich durch den Schaufelfuß erstreckt.

Aus dem Stand der Technik ist es bekannt, die in den Kühlluftkanal eintretende Luftströmung mit einem Drall zu versehen, um den Wärmeübergang und damit die Kühlung zu verbessern.

Eine aus der DE 100 53 356 A1 bekannte Turbinenschaufel weist zur effizienten Innenkühlung einen innen liegenden Vorderkantenkühlkanal mit rundem Kanalquerschnitt und über die Länge des Kühlkanals übereinander angeordnete Kühlluftzuführungsbohrungen auf, die von einem in der Schaufel ausgebildeten Kühlmittelkanal im Wesentlichen tangential in den Vorderkantenkühlkanal münden und in diesem Kühlluftwirbel zur Erzielung einer hohen Kühlwirkung erzeugen. Bei dieser Konstruktion ergibt sich der Nachteil, dass sich die so gebildete Drallströmung nicht optimal über die gesamte Länge des Kühlluftkanals entwickelt. Somit sind die zur Kühlung effektiven Strömungsphänomene, wie etwa der Rückstromkern und die Grenzschichtinstabilitäten nicht optimal ausgebildet. Ein weiterer Nachteil besteht darin, dass die Gesamtstruktur durch die vielen Ausnehmungen eine geringere Festigkeit aufweist.

In der EP 1 621 730 A1 wird eine Lösung beschrieben, bei welcher in dem Kühlluftkanal schraubenförmig angeordnete Rippen ausgebildet sind, welche die Strömung in einen Drall versetzen sollen. Diese Konstruktion weist jedoch den Nachteil auf, dass es nur zu einer unzureichenden Drallströmung kommt, da nur kleine Drallzahlen erreicht werden können. Durch den hohen Anstellwinkel der Rippen weicht die Strömung zur Mitte aus, so dass die Rippen hauptsächlich als Turbulatoren wirken. Im Übrigen ist eine derartige Konstruktion sehr aufwendig in der Herstellung.

Weiterhin wurde vorgeschlagen, durch eine tangentiale Einströmung in einem Kanal im Schaufelfuß eine Drallströmung oder Zyklonströmung zu erzeugen. Hierbei ergeben sich jedoch relativ hohe aerodynamische Verluste.

Aus der DE 853 534 B ist eine luftgekühlte Gasturbinenschaufel bekannt, bei welcher in einem Hohlraum der fertiggestellten Schaufel ein Drallkörper eingesetzt ist, wobei der Drallkörper nach der Fertigstellung der Schaufel montiert wird, bevor die Schaufel mit einer Scheibe oder einem Radkranz verbunden wird. Der Drallkörper erstreckt sich über eine wesentliche Länge des Innenraums der Schaufel.

Ferner ist aus der DE 698 17 094 T2 eine Turbinenschaufel gemäß dem Oberbegriff des Anspruchs 1 bekannt.

Der Erfindung liegt die Aufgabe zugrunde, eine Turbinenschaufel der eingangs genannten Art sowie ein Verfahren zu deren Herstellung zu schaffen, welche bei einfachem Aufbau und einfacher, kostengünstiger Herstellbarkeit sowie hoher mechanischer Festigkeit eine Optimierung des Wärmeübergangs der durch den Kühlluftkanal strömenden Luft gewährleistet.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß ist somit vorgesehen, dass im Übergangsbereich zwischen Schaufelfuß und Schaufelblatt in dem Kühlluftkanal zumindest ein Drallerzeugungselement angeordnet ist, welches bevorzugt als separates Element ausgebildet ist. Die Erfindung beschreibt somit eine Turbinenschaufel mit einem an einem Schaufelfuß angeordneten Schaufelblatt, welches zumindest einen in Längsrichtung der Turbinenschaufel verlaufenden, und somit sich radial, bezogen auf die Maschinenachse erstreckenden, in der Turbinenschaufel angeordneten Kühlluftkanal aufweist, welcher sich durch den Schaufelfuß erstreckt, wobei im Übergangsbereich zwischen Schaufelfuß und Schaufelblatt in dem Kühlluftkanal zumindest ein Drallerzeugungselement angeordnet ist.

Die Erfindung bezieht sich somit auf die Erzeugung einer Drallströmung in einem radial (bezogen auf die Triebwerksachse) verlaufenden Kühlluftkanal in der Turbinenschaufel. Damit findet erfindungsgemäß die Drallerzeugung in dem beschaufelten Drallerzeugungselement statt, welches als Leitrad ausgebildet ist. Das Drallerzeugungselement ist im Übergangsbereich zwischen dem Schaufelfuß und dem Schaufelblatt oder an geeigneter Stelle im Schaufelfuß angeordnet und bewirkt eine strömungsoptimierte Drallerzeugung oder Zyklonerzeugung. Da das erfindungsgemäße Drallerzeugungselement als separates Bauteil gefertigt und nachfolgend in die Turbinenschaufel eingesetzt und dort fixiert wird, kann die Herstellung des Drallerzeugungselements in präziser und strömungstechnisch optimierter Weise erfolgen. Bevorzugt ist das Drallerzeugungselement erfindungsgemäß als Gussteil ausgebildet, es kann in vorteilhafter Weise aus demselben Material wie die Turbinenschaufel gefertigt werden.

In bevorzugter Ausgestaltung der Erfindung weist das Drallerzeugungselement einen äußeren Ring sowie mehrere an diesem angeordnete drallerzeugende Leitschaufeln auf. Diese können in bevorzugter Weise mit einem zentrischen Bereich verbunden sein.

In einer alternativen Ausgestaltung der Erfindung ist es jedoch auch möglich, anstelle eines separaten Drallerzeugungselements dieses einstückig mit der Schaufel auszubilden und somit bevorzugterweise beim Guß der Schaufel mitzuerzeugen.

Bei der Verwendung eines separaten Drallerzeugungselements ist es besonders vorteilhaft, dass dieses nachträglich in die Turbinenschaufel eingebracht und dort fixiert werden kann. Dadurch ist es möglich, das Drallerzeugungselement, welches mit seinem äußeren Ring die Form eines flachen Zylinders aufweist, entlang seiner Hochachse, beziehungsweise quer zur Zylinderachse, in die Turbinenschaufel einzuführen und dann an einer bestimmten Position im Kühlluftkanal in die gewünschte Lage zu drehen. Das Drallerzeugungselement kann dann in geeigneter Weise mittels eines Sprengrings, mittels Clips, mittels angegossener Nasen oder in ähnlicher Weise, in der endgültigen Position fixiert werden. Dabei ist sowohl die radiale Fixierung in der Schaufel gewährleistet, als auch eine Sicherung gegen Verdrehen, so dass sich die gewünschte Drallströmung in optimaler Weise ausbildet.

Die erfindungsgemäße Lösung zeichnet sich durch eine Reihe erheblicher Vorteile aus. Zunächst ergibt sich ein verringerter Druckverlust bei der Erzeugung einer Zyklonströmung, verglichen mit den aus dem Stand der Technik bekannten Lösungen. Durch den verringerten Druckverlust ergibt sich ein höherer Reservedruck für die Filmkühlungsversorgung. Ein weiterer Vorteil besteht darin, dass, im Vergleich zum Stand der Technik, eine vereinfachte Anordnung und Ausgestaltung der Kühlluftversorgungskanäle im Schaufelfuß und damit vereinfachte Gussgeometrien realisiert werden können. Weiterhin führt die erfindungsgemäße Lösung nicht zu einer Schwächung der mechanischen Eigenschaften der Turbinenschaufel. Erfindungsgemäß kann somit ein Zyklonkühlungskonzept für die Turbinenschaufel realisiert werden, welches hinsichtlich der Strömungsverhältnisse und des Wärmeüberganges vorteilhaft ist und beispielsweise zu einer Kühllufteinsparung, zu einer Senkung der Oberflächentemperatur der Turbinenschaufel sowie zu einer verbesserten Haltbarkeit der Beschaufelung führt.

Hinsichtlich des erfindungsgemäßen Herstellungsverfahrens zur Herstellung der Turbinenschaufel ist in einer ersten Variante der Erfindung vorgesehen, dass das Drallerzeugungselement als separates Bauteil gefertigt wird. Dieses kann, wie erwähnt, aus dem selben oder einem anderen Werkstoff als die Turbinenschaufel bestehen. Nach der Fertigung der Turbinenschaufel wird erfindungsgemäß das Drallerzeugungselement durch den Schaufelfuß in den Innenraum der Turbinenschaufel eingeführt und positioniert. Die Positionierung kann beispielsweise durch Verrastung mittels einer Rastnase oder ähnlichem erfolgen, wobei entsprechende Anschläge oder Vorsprünge in dem Innenraum der Turbinenschaufel ausgebildet sind.

Besonders vorteilhaft ist es, wenn das Drallerzeugungselement mit seiner Mittelachse in einer zu einer Schaufellängsachse querliegenden Position durch den Schaufelfuß eingeschoben wird. Da die Ausnehmung im Schaufelfuß üblicherweise nicht beliebig groß ist und da der Schaufelfuß keinen runden, sondern einen rechteckigen Querschnitt aufweist, ist es somit möglich, die Ausnehmung des Schaufelfußes entsprechend zu dimensionieren und das Drallerzeugungselement einzuschieben. Im Übergangsbereich vom Schaufelfuß zum Schaufelblatt erweitert sich erfindungsgemäß der Querschnitt des Innenraums der Turbinenschaufel (Kühlluftkanal bzw. Vorderkanten-Kühlluftkanal). In diesem Bereich wird erfindungsgemäß das Drallerzeugungselement gedreht und nachfolgend so positioniert, dass seine Mittelachse im Wesentlichen parallel zur Schaufellängsachse angeordnet ist.

In einer weiteren Variante der Erfindung ist vorgesehen, dass das Drallerzeugungselement bereits während des Gussvorgangs der Turbinenschaufel einstückig mit dieser erzeugt wird. Hierbei ist es besonders vorteilhaft, wenn das Drallerzeugungselement in einem Kern, welcher zur Herstellung des Kühlluftkanals bzw. des Vorderkanten-Kühlluftkanals der Turbinenschaufel verwendet wird, ausgebildet ist. Derartige Kerne sind üblicherweise als Keramikkerne gefertigt. Bei der erfindungsgemäßen Vorgehensweise ist somit nach der chemischen Auflösung des Keramikkerns das Drallerzeugungselement an der richtigen Position im Inneren der Turbinenschaufel ausgebildet.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung;
- Fig. 2: eine Leitschaufel- und Turbinenschaufelanordnung eines Flugtriebwerks;
- Fig. 3: perspektivische Ansichten eines erfindungsgemäßen Drallerzeugungselements; und
- Fig. 4 bis 7: einzelne Montageschritte des Drallerzeugungselements in einer Turbinenschaufel.

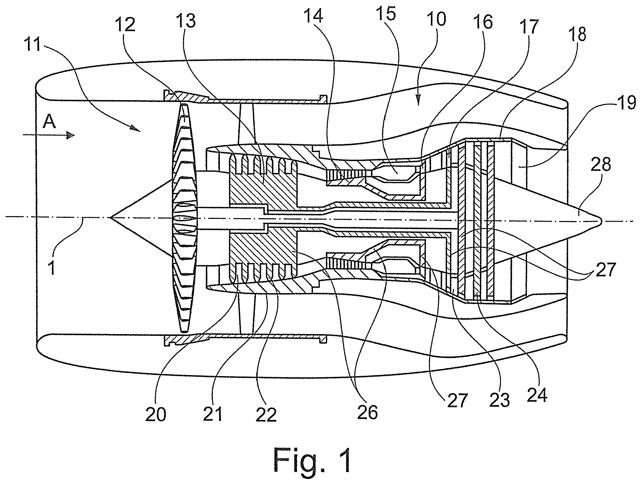

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

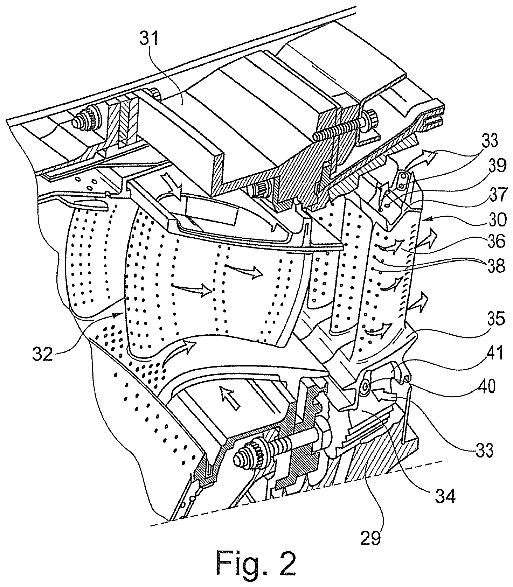

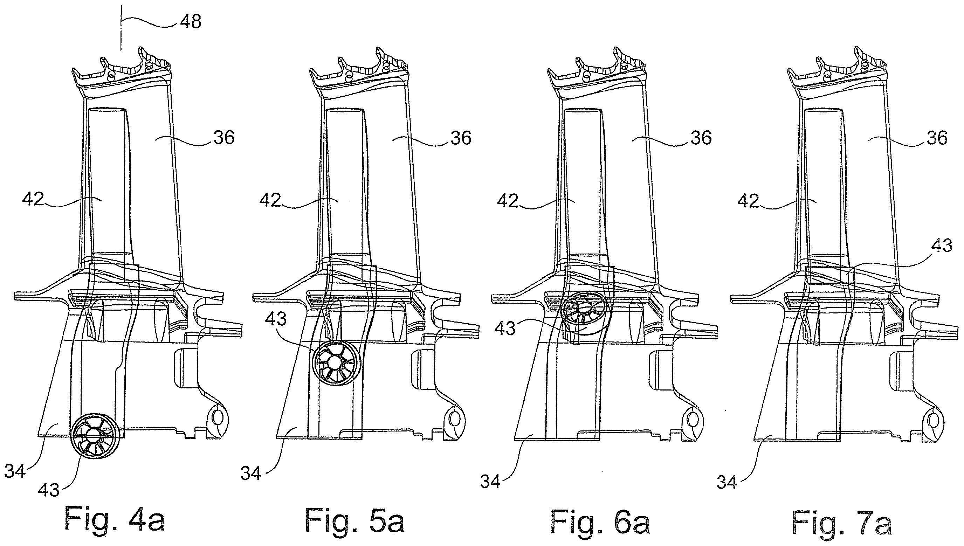

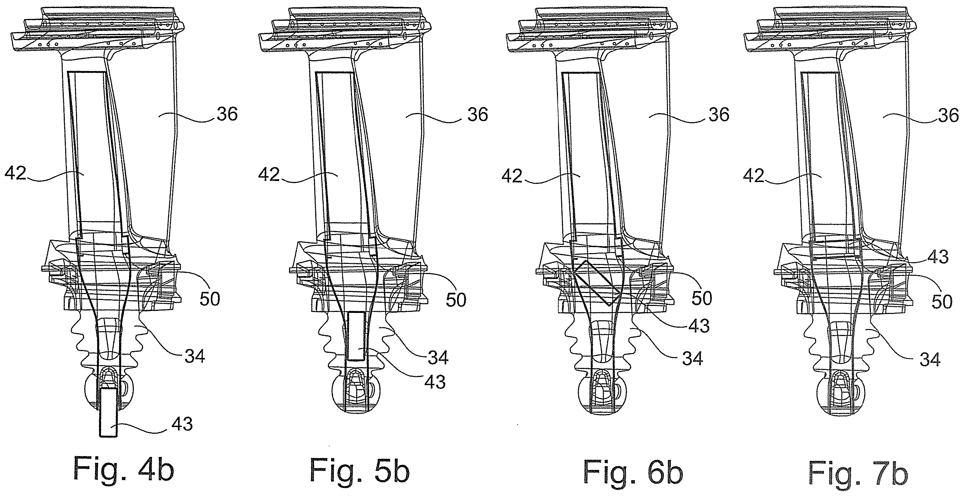

Wie Fig. 2 zeigt, umfasst die Turbine eines Gasturbinentriebwerks eine Mehrzahl von mit einer Rotorscheibe 29 verbundenen Turbinenschaufeln 30 und diesen stromauf zugeordneten, am Triebwerksgehäuse 31 angebrachten Leitschaufeln 32, die durch Außenkühlung (Filmkühlung) und Innenkühlung mit von einem Kompressor zugeführter, durch Pfeile 33 gekennzeichneter Kühlluft gekühlt werden. Die Turbinenschaufel 30 weist einen an der Rotorscheibe 29 gehaltenen Schaufelfuß 34, eine innere Plattform 35, ein Schaufelblatt 36 und eine äußere Plattform 37 auf. Das zur Innenkühlung als Hohlkörper ausgebildete Schaufelblatt 36 ist mit Kühlkanälen und Filmkühlbohrungen 38 sowie Luftaustrittsöffnungen 39 an der Schaufelspitze ausgebildet. Durch jeweils einen von den gegenüberliegenden Seiten des Schaufelfußes 34 ausgehenden Luftzuführungskanal 40 gelangt Kühlluft (Pfeil 33) aus dem unterhalb der Plattformen 37 zwischen zwei benachbarten Turbinenschaufeln 30 vorhandenen Hohlraum 41 von zwei gegenüberliegenden Seiten (saugseitig und druckseitig) in den unteren Abschnitt eines sich im Inneren der Turbinenschaufel 30 vom Schaufelfuß 34 bis zur Schaufelspitze entlang der Schaufelvorderkante erstreckenden Vorderkantenkühlkanals 42 (Fig. 4 bis 7). Die dem Vorderkantenkühlkanal 42 zugeführte Kühlluft 33 strömt über zur die Außenkühlung des Schaufelblattes 36 vorgesehenen Filmkühlbohrungen 38 und die Luftaustrittsöffnungen 39 nach außen und/oder in weitere im Schaufelblatt 36 befindliche Kühlkanäle (nicht dargestellt).

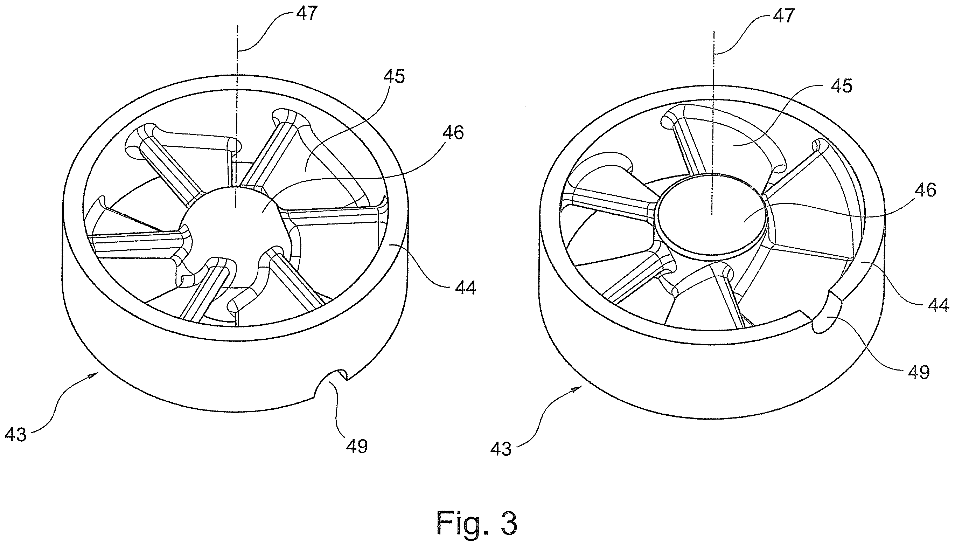

Die Fig. 3 zeigt in perspektivischer Darstellung ein erfindungsgemäßes Drallerzeugungselement 43, welches einen äußeren Ring 44 aufweist, der in Form eines flachen Zylinders ausgebildet ist. Einstückig mit dem Ring 44 sind drallerzeugende Leitschaufeln 45 verbunden, welche strömungsgünstig ausgebildet sind. Ein zentrischer Bereich 46 verbindet die radial inneren Endbereiche der drallerzeugenden Leitschaufeln 45. Die Fig. 3 zeigt in der linken Darstellung die Anströmseite und in der rechten Darstellung die Abströmseite des erfindungsgemäßen Drallerzeugungselements.

Das Bezugszeichen 49 zeigt eine Verriegelungsaussparung, welche dazu dient, die Verrastung des Drallerzeugungselements mittels einer Rastnase 50, welche in dem Kühlluftkanal 42 ausgebildet ist, vorzunehmen.

Die Fig. 4 bis 7 zeigen jeweils in der Seitenansicht und in der stirnseitigen Ansicht die einzelnen Montageschritte zur Einbringung des erfindungsgemäßen Drallerzeugungselements 43 in den Kühlluftkanal 42. Wie in den Fig. 4a und 4b dargestellt, wird das Drallerzeugungselement 43 hochkant durch den Schaufelfuß in den Kühlluftkanal 42 eingeschoben. Die Fig. 5a und 5b zeigen einen Montageschritt, bei welchem sich das Drallerzeugungselement 43 im Schaufelfuß befindet. Die Fig. 6a und 6b zeigen einen nachfolgenden Montagezustand, bei welchem das Drallerzeugungselement 43 gekippt wird, um dieses nachfolgend in die in den Fig. 7a und 7b gezeigte endgültige Lage am Übergangsbereich des Kühlluftkanals 42 vom Schaufelfuß 34 in das Schaufelblatt 36 zu fixieren. Die Fixierung erfolgt beispielsweise mittels Anlageringen, Nasen, Schnappelementen oder ähnlichem.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammern
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Rotorscheibe
- 30: Turbinenschaufel / Schaufelblatt
- 31: Triebwerksgehäuse
- 32: Leitschaufeln
- 33: Kühlluft, rotierende Kühlluftschicht (Pfeil)
- 34: Schaufelfuß
- 35: innere Plattform
- 36: Schaufelblatt
- 37: äußere Plattform
- 38: Filmkühlbohrung
- 39: Luftaustrittsöffnung
- 40: düsenförmiger Luftzuführungskanal
- 41: Hohlraum
- 42: Kühlluftkanal, Vorderkantenkühlkanal
- 43: Drallerzeugungselement
- 44: Ring
- 45: drallerzeugende Leitschaufel
- 46: zentrischer Kanal
- 47: Mittelachse des Drallerzeugungselements
- 48: Schaufellängsachse der Turbinenschaufel 30
- 49: Verriegelungsaussparung
- 50: Rastnase

## Patentansprüche

1. Turbinenschaufel (30) einer Gasturbine mit einem an einem Schaufelfuß (34) angeordneten Schaufelblatt (36), welches zumindest einen in Längsrichtung der Turbinenschaufel (30) verlaufenden, in der Turbinenschaufel (30) angeordneten Kühlluftkanal (42) aufweist, welcher sich durch den Schaufelfuß (34) erstreckt, **dadurch gekennzeichnet, dass** im Übergangsbereich zwischen Schaufelfuß (34) und Schaufelblatt (36) in dem Kühlluftkanal (42) zumindest ein Drallerzeugungselement (43) angeordnet ist, wobei das Drallerzeugungselement (43) einen äußeren Ring (44) sowie mehrere in diesem angeordnete drallerzeugende Leitschaufeln (45) umfasst, welche mit einem zentrischen Bereich (46) verbunden sind.

2. Turbinenschaufel nach Anspruch 1, **dadurch gekennzeichnet, dass** in dem Kühlluftkanal (42) zumindest ein formschlüssig mit dem Drallerzeugungselement (43) in Eingriff bringbares Fixierelement ausgebildet ist.

3. Turbinenschaufel nach einem der Ansprüche 1 oder 2, **dadurch gekennzeichnet, dass** der äußere Ring (44) zur Einführung in den Kühlluftkanal (42) vom Schaufelfuß (34) aus dimensioniert ist.

4. Turbinenschaufel nach einem der Ansprüche 1 oder 2, **dadurch gekennzeichnet, dass** das Drallerzeugungselement (43) einstückig mit der Turbinenschaufel (30) verbunden ist.

5. Turbinenschaufel nach einem der Ansprüche 1 bis 4, **dadurch gekennzeichnet, dass** das Drallerzeugungselement (43) in Form eines die Kühlluftströmung in eine Drallbewegung versetzenden Leitrads ausgebildet ist.

6. Turbinenschaufel nach einem der Ansprüche 1 bis 5, **dadurch gekennzeichnet, dass** das Drallerzeugungselement (43) aus demselben Material wie die Turbinenschaufel (30) gefertigt ist.

7. Turbinenschaufel nach einem der Ansprüche 1 bis 6, **dadurch gekennzeichnet, dass** das Drallerzeugungselement (43) als Gussteil ausgebildet ist.

8. Turbinenschaufel nach einem der Ansprüche 1 bis 7, **dadurch gekennzeichnet, dass** das Drallerzeugungselement (43) als Teil eines Gusskerns ausgebildet ist.

9. Verfahren zur Herstellung einer Turbinenschaufel nach einem der Ansprüche 1 bis 8, **dadurch gekennzeichnet, dass** das Drallerzeugungselement (43) als separates Bauteil gefertigt wird und nach der Fertigung der Turbinenschaufel (30) durch den Schaufelfuß (34) eingeführt und positioniert wird.

10. Verfahren nach Anspruch 9, **dadurch gekennzeichnet, dass** das Drallerzeugungselement (43) mit seiner Mittelachse (47) in einer zu einer Schaufellängsachse (48) quer liegenden Position eingeschoben und im Übergangsbereich vom Schaufelfuß (34) zum Schaufelblatt (36) gedreht und mit seiner Mittelachse (47) im Wesentlichen parallel zur Schaufellängsachse (48) positioniert wird.

11. Verfahren nach Anspruch 9 oder 10, **dadurch gekennzeichnet, dass** das Drallerzeugungselement (43) bei seiner Positionierung verrastet wird.

12. Verfahren zur Herstellung einer Turbinenschaufel nach einem der Ansprüche 1 bis 8, **dadurch gekennzeichnet, dass** das Drallerzeugungselement (43) während des Gussvorgangs der Turbinenschaufel (30) einstückig mit dieser erzeugt wird.

13. Verfahren nach Anspruch 12, **dadurch gekennzeichnet, dass** das Drallerzeugungselement (43) in einem Kern zur Herstellung der Turbinenschaufel (30) ausgebildet ist und nach Entfernung des Kerns als einstückiger Bestandteil der Turbinenschaufel (30) verbleibt.

## Claims

1. Turbine blade (30) of a gas turbine with an airfoil (36) arranged on a blade root (34) and having at least one cooling air duct (42) running in the longitudinal direction of the turbine blade (30), arranged inside the turbine blade (30) and extending through the blade root (34), **characterized in that** at least one swirl-generating element (43) is arranged in the transitional area between blade root (34) and airfoil (36) in the cooling air duct (42), with the swirl-generating element (43) including an outer ring (44) and several swirl-generating stator vanes (45) arranged therein, which are connected to a centric area (46).

2. Turbine blade in accordance with Claim 1, **characterized in that** inside the cooling air duct (42) at least one fixing element is provided that can be positively engaged with the swirl-generating element (43).

3. Turbine blade in accordance with one of the Claims 1 or 2, **characterized in that** the outer ring (44) is dimensioned such that it can be inserted into the cooling air duct (42) from the blade root (34).

4. Turbine blade in accordance with one of the Claims 1 or 2, **characterized in that** the swirl-generating element (43) is connected to the turbine blade (30) in one piece.

5. Turbine blade in accordance with one of the Claims 1 to 4, **characterized in that** the swirl-generating element (43) is designed in the form of a guide vane arrangement imparting a swirl motion to the cooling airflow.

6. Turbine blade in accordance with one of the Claims 1 to 5, **characterized in that** the swirl-generating element (43) is made from the same material as the turbine blade (30).

7. Turbine blade in accordance with one of the Claims 1 to 6, **characterized in that** the swirl-generating element (43) is designed as a casting.

8. Turbine blade in accordance with one of the Claims 1 to 7, **characterized in that** the swirl-generating element (43) is designed as part of a casting core.

9. Method for manufacturing a turbine blade in accordance with one of the Claims 1 to 8, **characterized in that** the swirl-generating element (43) is manufactured as a separate component and is introduced through the blade root (34) and positioned after the manufacture of the turbine blade (30).

10. Method in accordance with Claim 9, **characterized in that** the swirl-generating element (43) is inserted with its center axis (47) in a position transverse to a blade longitudinal axis (48), is rotated in the transitional area between blade root (34) and airfoil (36) and is positioned with its center axis (47) substantially parallel to the blade longitudinal axis (48).

11. Method in accordance with Claim 9 or 10, **characterized in that** the swirl-generating element (43) is locked upon positioning.

12. Method for manufacturing a turbine blade in accordance with one of the Claims 1 to 8, **characterized in that** the swirl-generating element (43) is produced in one piece with the turbine blade (30) during the casting process of the latter.

13. Method in accordance with Claim 12, **characterized in that** the swirl-generating element (43) is provided in a core for the manufacture of the turbine blade (30) and remains after removal of the core as one-piece constituent of the turbine blade (30).

## Revendications

1. Aube de turbine (30) d'une turbine à gaz avec une pale (36) disposée sur un pied d'aube (34) qui présente au moins un canal d'air de refroidissement (42) s'étendant dans le sens longitudinal de l'aube de turbine (30), disposé dans l'aube de turbine (30) et qui s'étend à travers le pied d'aube (34), **caractérisée en ce que** dans la zone de transition entre le pied d'aube (34) et la pale (36), au moins un élément créant un tourbillon (43) est disposé dans le canal d'air de refroidissement (42), sachant que l'élément créant un tourbillon (43) comprend un anneau extérieur (44) ainsi que plusieurs aubes directrices (45) disposées dans celui-ci et créant un tourbillon, qui sont reliées à une zone centrale (46).

2. Aube de turbine selon la revendication n° 1, **caractérisée en ce qu'**au moins un élément de fixation pouvant être mis en prise, par complémentarité de forme, avec l'élément créant un tourbillon (43) est prévu dans le canal d'air de refroidissement (42).

3. Aube de turbine selon une des revendications n° 1 ou n° 2, **caractérisée en ce que** l'anneau extérieur (44) est dimensionné pour être inséré dans le canal d'air de refroidissement (42) depuis le pied d'aube (34).

4. Aube de turbine selon une des revendications n° 1 ou n° 2, **caractérisée en ce que** l'élément créant un tourbillon (43) est relié en une seule pièce à l'aube de turbine (30).

5. Aube de turbine selon une des revendications n° 1 à n° 4, **caractérisée en ce que** l'élément créant un tourbillon (43) est conçu sous la forme d'une roue directrice imposant un mouvement tourbillonnaire au flux d'air de refroidissement.

6. Aube de turbine selon une des revendications n° 1 à n° 5, **caractérisée en ce que** l'élément créant un tourbillon (43) est fabriqué dans le même matériau que l'aube de turbine (30).

7. Aube de turbine selon une des revendications n° 1 à n° 6, **caractérisée en ce que** l'élément créant un tourbillon (43) est conçu sous forme de pièce de fonte.

8. Aube de turbine selon une des revendications n° 1 à n° 7, **caractérisée en ce que** l'élément créant un tourbillon (43) est conçu en tant que partie d'un noyau de fonte.

9. Procédé pour fabriquer une aube de turbine selon une des revendications n° 1 à n° 8, **caractérisé en ce que** l'élément créant un tourbillon (43) est fabriqué comme composant séparé et qu'il est inséré à travers le pied d'aube (34) et positionné après la fabrication de l'aube de turbine (30).

10. Procédé selon la revendication n° 9, **caractérisé en ce que** l'élément créant un tourbillon (43) est inséré avec son axe médian (47) dans une position transversale à un axe longitudinal de l'aube (48), tourné dans la zone de transition entre le pied d'aube (34) et la pale (36) et positionné avec son axe médian (47) essentiellement parallèle à l'axe longitudinal de l'aube (48).

11. Procédé selon la revendication n° 9 ou n° 10, **caractérisé en ce que** l'élément créant un tourbillon (43) est encliqueté lors de son positionnement.

12. Procédé pour fabriquer une aube de turbine selon une des revendications n° 1 à n° 8, **caractérisé en ce que** l'élément créant un tourbillon (43) est produit en une seule pièce avec l'aube de turbine (30) lors de la fonte de celle-ci.

13. Procédé selon la revendication n° 12, **caractérisé en ce que** l'élément créant un tourbillon (43) est conçu dans un noyau pour la fabrication de l'aube de turbine (30) et demeure un composant monobloc de l'aube de turbine (30), une fois le noyau est retiré.
